# EUROPÄISCHE PATENTSCHRIFT

(11) **EP 0 899 251 B1**
(45) Veröffentlichungstag und Bekanntmachung des Hinweises auf die Patenterteilung: **27.11.2002**
(21) Anmeldenummer: 98114692.1
(22) Anmeldetag: 05.08.1998
(51) Int. Cl.: C04B 35/573, C04B 35/563, C04B 35/583, C04B 35/581, C04B 35/58, C04B 35/80

(54) **Verfahren zur Herstellung eines Körpers mit einer porösen Matrix aus mindestens einem rekristallisiertem Werkstoff**
Method of making a body having a porous matrix of at least one recrystallized material
Procédé de fabrication d'un corps ayant une matrice poreuse d'au moins un matériau recristallisé

(30) Priorität: 22.08.1997 DE 19736560
(43) Veröffentlichungstag der Anmeldung: 03.03.1999
(73) Patentinhaber: DaimlerChrysler AG, 70567 Stuttgart (DE)
(72) Erfinder: Kriegesmann, Jochen, Prof. Dr., 56203 Höhr-Grenzhausen (DE); Meistring, Rolf, Dr., 85625 Glonn (DE); Neumann, Nicole, 89077 Ulm (DE); Nixdorf, Reinhard, 53721 Siegburg (DE)

(56) Entgegenhaltungen:
- DE-A- 3 149 796
- US-A- 2 964 823
- US-A- 4 863 657

## Beschreibung

Die Erfindung betrifft ein Verfahren zur Herstellung eines Körpers mit einer porösen Matrix aus rekristallisiertem Siliziumcarbid nach Anspruch 1, einen durch dieses Verfahren herstellbaren Körper sowie ein Verfahren zur Herstellung eines faserverstärkten Körpers mit einer porösen Matrix aus einem rekristallisierten Keramischen Werkstoff und einen durch dieses Verfahren herstellbaren Körper.

Rekristallisierte Werkstoffe wie z.B. rekristallisiertes Siliziumcarbid (RSiC) und rekristallisiertes Borcarbid (RB₄C) sind allgemein bekannt. Rekristallisiertes Aluminiumnitrid (RAlN) oder rekristallisiertes Titancarbid (RTiC) oder rekristallisiertes Bornitrid (RBN) sind ebenfalls denkbar. Sie werden im allgemeinen durch Sintern von Rohstoffversätzen gewonnen, die Rohstoffpartikel und ggf. Zuschlagstoffe enthalten.

Der bekannteste Vertreter ist rekristallisiertes Siliziumcarbid. Es hat gegenüber dem herkömmlichen gesinterten Siliziumcarbid (SSiC) den Vorteil, daß es während der Sinterung nicht zu Schwindungserscheinungen kommt. Das SSiC gewinnt man aus feinkristallinen SiC-Partikeln unter Zusatz von Sinteradditiven zur Aktivierung und Kohlenstoff zum Dichtsintern (beispielsweise Zusätze von Bor und Kohlenstoff oder Aluminium und Kohlenstoff). Der Rohstoffversatz wird einem Formgebungsprozeß unterworfen und der resultierende Grünkörper bei ca. 2000° C drucklos gesintert. Man erhält ein dichtes Produkt mit über 96% der theoretischen Dichte. Die bei der Sinterung auftretende Verdichtung führt allerdings zu einer Schwindung.

Rekristallisiertes Siliziumcarbid (RSiC) erhält man durch Sintern von Siliziumcarbid-Partikeln vorzugsweise bimodaler Kornverteilungen. Gattungsgemäße Verfahren sind aus der US-PS 2,964,823, der DE-OS 2 837 900 und der DE 31 49 796 bekannt. Die mittlere Partikelgröße des Grobkorns liegt im Bereich um 100 µm. Die Größe des Feinkorns liegt bei etwa 1,5 bis 8 µm. Diese Partikel werden bei Temperaturen oberhalb von 2000° C zu einem porösen Körper gesintert. Man benötigt keine Sinteradditive. Die Gegenwart von freiem Kohlenstoff ist für die Verfestigung des Gefüges schädlich, da er den Sintermechanismus behindert oder gar verhindert. Der Sintermechanismus ist bekannt. Bei der Sinterung findet keine Verdichtung statt, so daß man auch keine Schwindung beobachtet. Man erhält reines, unverdichtetes poröses Siliziumcarbid.

Die US 4,863,657 beschreibt ein Verfahren zur Herstellung eines SiC-Körpers. Der Rohstoff dieses Körpers besteht aus einem SiC-Pulver mit einer trimodalen Kornverteilung. Das Pulver wird in eine Form gepreßt, bei 800°C vorgesintert und anschließend mit flüssigem Si infiltriert. Bei diesem letzten Verfahrensschritt setzt ein Verdichtungsprozeß ein, der in dieser Schrift als "Sintern" bezeichnet wird.

Siliziumcarbid ist auch Bestandteil von faserverstärkten Keramiken. Diese werden vorzugsweise über die Polymerroute, über chemische Gasphaseninfiltration (CVI) oder durch Flüssigsilizierung hergestellt. Beim Flüssigsilizieren von faserverstärkten Keramiken wird eine Kohlenstoffmatrix im Kontakt mit flüssigem Silizium zu Siliziumcarbid konvertiert. Die zu konvertierende Kohlenstoffmatrix wird üblicherweise durch Pyrolyse von Harzen mit hoher Kohlenstoff-Ausbeute erzeugt. Die Herstellung faserverstärkter Keramiken durch Silizierung von C-Matrices - vor allem von kohlenstofffaserverstärkten Matrices - ist an sich bekannt. Die Fasern werden mit dem Harz und gegebenenfalls Zuschlagstoffen gemischt, geformt und ausgehärtet. Der resultierende Grünling wird pyrolysiert. Dabei entsteht ein poröser faserverstärkter Kohlenstoff-Körper, der der Silizierung unterworfen wird.

Bei diesem Verfahren ergeben sich im allgemeinen drei Probleme.

Erstens beobachtet man meistens eine unregelmäßige Porenverteilung. Es entstehen zum Teil sehr große Poren oder Spalten. Bei der Flüssigsilizierung füllt das Silizium diese Poren aus und verbleibt dort. Es kann sich nicht mit der Kohlenstoff-Matrix zu Siliziumcarbid umsetzen.

Zweitens entstehen aus dem Kohlenstoff spendenden Harz mehr oder weniger massive, unregelmäßige Kohlenstoff-Matrixbereiche. Bei der Reaktion mit flüssigem Silizium bildet sich um größere C-Bereiche oberflächlich eine Siliziumcarbid-Schicht. Der Kohlenstoff wird also nicht völlig umgesetzt. Die entstehende, etwa 5-10 µm dicke Randschicht behindert die weitere Umsetzung des von ihr eingeschlossenen Kohlenstoffs. Dessen Umsetzung ist nur noch über Diffusionsprozesse über diese Randschicht hinweg möglich. Diese Prozesse laufen, wenn überhaupt, nur sehr langsam ab.

Drittens ist die resultierende Porenstruktur nicht durchgehend offen bzw. können Porenkanäle durch die Konvertierungsreaktion verschlossen werden. Es gibt also Bereiche in die das flüssige Silizium nicht eindringen kann. Dort findet auch keine Konvertierung der Kohlenstoff-Matrix statt.

Um Abhilfe zu schaffen, wird bei der Bildung der Kohlenstoff-Matrix (z.B. bei der Pyrolyse des Harzes) versucht, eine Rißstruktur zu erzeugen, in die das flüssige Silizium eindringen kann. Man versucht also eine künstliche Kanalporosität oder Offenporigkeit zu schaffen. Allerdings erfolgt die Konvertierung zu Siliziumcarbid nur in diesen Kanälen. In anderen Versuchen hat man sich damit beschäftigt die Porenstruktur über Harzzusätze zu beeinflussen. Auch hier wurde eine vollkommene Konvertierung der Kohlenstoff-Matrix nicht erreicht.

Beim bekannten Verfahren erhält man also eine faserverstärkte Siliziumcarbid-Keramik, in der ein Rest-Kohlenstoffgehalt und ein Rest-Siliziumgehalt verbleibt. Derartige Keramiken sind aber für Hochtemperaturanwendungen in oxidierender Atmosphäre nicht geeignet, weil sich der Restkohlenstoff an Luft ab ca. 400° C zersetzt. Für Anwendungen über 1400° C darf auch kein freies Silizium vorhanden sein, weil es bei diesen Temperaturen zu schmelzen beginnt.

Aufgabe der Erfindung ist es daher, Verfahren und Erzeugnisse der o. g. Art bereitzustellen, mit denen auf einfache und billige Weise Siliziumkarbid-Körper mit oder ohne Faserverstärkung, mit einer regelmäßigen Porenstruktur erhältlich sind und die Prozesstemperaturen gegenüber dem Stand der Technik deutlich gesenkt werden.

Die Lösung besteht in einem Verfahren mit den Merkmalen des Anspruchs 1 bzw.16 und den daraus herstellbaren Erzeugnissen.

Das erfindungsgemäße Verfahren nach Anspruch 1 ermöglicht es, rekristallisierte keramische SiC-Werkstoffe mit einer definierten, besonderes feinen und gleichmäßigen Porenstruktur zu erzeugen. Durch die Absenkung der Sintertemperatur sind das erfindungsgemäße Verfahren und folglich das damit erhältliche Erzeugnis auch preisgünstiger und somit für industrielle Anwendungen geeignet.

Das erfindungsgemäße Verfahren nach Anspruch 16 ermöglicht es, die Struktur und Porosität poröser Matrices so einzustellen, daß ein flüssiges Infiltrationsmittel wie Silizium oder ein Kohlenstoffprecursor homogen in den gesamten Körper eindringen kann.

Die erfindungsgemäßen Verfahren beruhen auf der Erkenntnis, daß die Probleme, wie sie bei den bisher bekannten Verfahren auftraten, auf die Schwindung der Matrix beim Pyrolysieren zurückzuführen sind. Nun ist es zwar bekannt, daß rekristallisierte Werkstoffen wie z.B. rekristallisiertes Siliziumcarbid beim Sintern keine Schwindung zeigen. Die Sintertemperaturen lagen allerdings bisher viel zu hoch, als das dieses Material für die Herstellung faserverstärkter Keramiken hätte eingesetzt werden können. Übliche keramische Verstärkungsfasern können maximal Temperaturen von 1600°C ausgesetzt werden. Noch in der Entwicklung befindliche Fasern, wie z.B. SiBNC-Fasern, können in inerter Atmosphäre möglicherweise auch höheren Temperaturen ausgesetzt werden, die jedoch auch deutlich unter 2000°C liegen dürften. Die hochtemperaturfesten C-Fasern sind ebenfalls nur unter inerten Bedingungen beständig.

Es hat sich herausgestellt, daß dann, wenn besonders feine Partikel verwendet werden, die Sintertemperatur von rekristallisierten Keramikwerkstoffen wie z.B. Siliziumcarbid überraschend stark herabgesetzt wird, wie es so nicht zu erwarten war. Man benötigt also eine bestimmte Korngrößenverteilung, d.h. die zu sinternde Substanz muß einen Anteil mit besonders feiner Körnung enthalten. Dieser Feinkornanteil sublimiert bei niedrigen Temperaturen und schlägt sich an energetisch günstigen Bereichen wie z.B. Kontaktstellen der gröberen Körner nieder. Daraus resultiert eine Verfestigung, die mit keinerlei Schwindung verbunden ist.

Die Sintertemperatur ist also über die Korngrößenverteilung steuerbar und gezielt einstellbar. Es sind Sintertemperaturen von unter 2000°C, und zwar bis zu 1800°C, im Einzelfall bis zu 1400°C erreichbar.

Durch die Vorgabe der Korngröße und der Korngrößenverteilung kann ferner die Porenstruktur gezielt eingestellt werden. Man kann also eine definierte gleichmäßige offenporige Struktur erhalten. Die Poren können anschließend z.B. mit Kohlenstoff oder Kohlenstoff-Precursoren gefüllt werden. Bei der Herstellung faserverstärkter Siliziumcarbid-Keramiken ermöglicht es die homogene Porenstruktur beispielsweise, das Kohlenstoffangebot, d.h. die Belegung der Poren so zu steuern, daß später eine vollständige Umsetzung des Kohlenstoffs mit dem flüssigen Silizium erfolgen kann.

Alle Nachteile des Standes der Technik werden dadurch behoben. Bei der Herstellung faserverstärkter Siliziumcarbidkeramiken bleibt z.B. kein Rest-Kohlenstoffgehalt oder Rest-Siliziumgehalt zurück. Die Struktur ist absolut gleichmäßig. Durch die niedrigen Sintertemperaturen werden die Fasern geschont. Die niedrigen Temperaturen haben auch eine merkliche Kostenersparnis zur Folge.

Vorteilhafte Weiterbildungen ergeben sich aus den Unteransprüchen. Bei der Korngrößenverteilung hat man die Wahl zwischen mehreren Möglichkeiten. Sie kann monomodal mit einer breiteren Kornverteilung, aber auch bimodal mit einer Feinkorn- und einer Grobkorn-Fraktion sein. Auch ein trimodaler Aufbau mit einem feinem, einem mittelgroben und einem groben Korn ist denkbar. Wichtig ist in allen Fällen, daß überhaupt ein Feinkornanteil vorhanden ist. Wird eine hohe Packungsdichte angestrebt, so wird vorzugsweise ein bimodaler Kornaufbau verwendet.

Die Obergrenze für die Korngröße des Feinkornanteils liegt bei 2 µm. Die untere Grenze liegt im nicht mehr zuverlässig meßbaren Bereich. Eine bevorzugte Korngrößenverteilung liegt zwischen 0,25 und 1 µm. Allgemein gilt, daß der Temperatur- und Zeitaufwand beim Sintern umso geringer ist, je geringer die Korngröße des Feinkornanteils ist. Die Korngröße des Grobkornanteils liegt bei 1,5 bis 30 µm, unabhängig von der Korngröße des jeweiligen Feinkornanteils. Bevorzugt sind Korngrößen von 2 bis 5 µm. Bei der Herstellung faserverstärkter Keramiken muß die Korngröße auf den Faserdurchmesser abgestimmt sein.

Bei einem monomodalen Feinkornaufbau liegen die Korngrößenbereiche vorzugsweise bei einem d₅₀-Wert von weniger als 10 µm, insbesondere 1 µm.

Es gibt zahlreiche Möglichkeiten zur Formgebung des jeweiligen Grünkörpers. Bevorzugt wird die Herstellung im Schlickerguß-Verfahren. Denkbar sind auch Druckguß und Folienguß, Extrudierverfahren, Spritzguß, isostatisches Pressen, axiales Pressen, RAM-Pressen und vergleichbare Verfahren. Wichtig sind bei der Verwendung von Langfasern oder Fasergeweben auch die klassischen bekannten Wickel- und Ablegetechniken, bei denen die Faser bzw. das Gewebe in einer Aufschlämmung des Rohstoffversatzes getaucht und anschließend gewickelt bzw. gelegt und verpreßt oder anderweitig verarbeitet wird.

Zur Einstellung der Porengröße und Porenstruktur sind neben der Korngröße und der Kornverteilung auch die jeweiligen Formgebungsverfahren zur Herstellung der Grünkörper mit einzubeziehen. Bei der Herstellung faserverstärkter Körper wird die Matrix auch in Faserbündel eingelagert und hält Kanäle offen. Die Fasern werden vollständig in die poröse Matrix eingebettet.

Der ggf. mit Verstärkungsfasern versehene Grünkörper wird bei Temperaturen bis 1800°C, vorzugsweise 1400 bis 1800°C, gesintert. Man erhält einen offenporigen porösen Körper mit gleichmäßiger Porenstruktur, der sich gut infiltrieren läßt. Zur Herstellung faserverstärkter Siliziumcarbid-Keramiken wird der poröse Körper mit Kohlenstoff oder einem Kohlenstoff-Precursor imprägniert. Dabei kann das Kohlenstoff-Angebot über den Precursortyp, also über seine Kohlenstoff-Ausbeute oder über den Verdünnungsgrad des Kohlenstoffs bzw. Precursors im Lösemittel oder Suspensionsmittel gesteuert werden. Die Silizierung erfolgt unter den üblichen Bedingungen. Bei diesem Verfahren findet bei keinem Verfahrensschritt eine Schwindung des Formkörpers oder des Composites statt.

Besonders vorteilhaft ist es, daß man zur Herstellung von RSiC bei den der Erfindung zugrundeliegenden Siliziumcarbid-Versätzen mit einem, dem in den Versätzen enthaltenen Siliziumdioxid entsprechenden Kohlenstoff-Anteil arbeiten kann. Bisher waren zur Herstellung von rekristallisiertem Siliziumcarbid Verunreinigungen mit Kohlenstoff nicht zulässig, da sie den Sinterprozeß behinderten. Bei der Verwendung eines besonders feinen Korns hat man jedoch eine besonders große spezifische Oberfläche (z.B. ca. 35 m²/g). Diese Oberfläche ist immer mit einer dünnen Schicht von Siliziumdioxid überzogen, welches für den Verfestigungsvorgang benötigt wird. Bei Verwendung eines besonders feinen Korns ist ein relativ hoher Siliziumdioxid-Gehalt vorhanden, der einen entsprechenden Kohlenstoff-Anteil zuläßt, ohne die Verfestigung zu behindern.

Zur Herstellung der faserverstärkten Körper geeignet sind alle bekannten Verstärkungsfasern, inklusive Whisker oder Platelets. Dazu gehören Kohlenstoff-Fasern, oxidische und nichtoxidische keramische Fasern (z.B. SiBNC-Fasern). Diese Fasern können sowohl als Kurzfasern als auch als kontinuierliche Fasern, z.B. Langfasern oder Fasergelege eingebracht werden.

Als rekristallisiertes Material eignet sich dafür neben rekristallisiertem Siliziumcarbid auch rekristallisiertes Borcarbid, rekristallisiertes Aluminiumnitrid und rekristallisiertes Titancarbid.

Die porösen Matrices können mit einem geeigneten metallischen oder nichtmetallischen Stoff versetzt werden. Beispiele für nichtmetallische Stoffe sind Kohlenstoffprecursoren oder Glasschmelzen. Durch Infiltration oder Reaktionsinfiltration dieser porösen Matrices lassen sich vollständig dichte Körper bzw. Verbundkörper mit vollständig dichter Matrix erzeugen.

Die Poren können jedoch auch nur teilweise z.B. mit reinem Kohlenstoff versetzt werden (z.B. für Filter wie etwa Gasfilter).

Im folgenden werden Ausführungsbeispiele der vorliegenden Erfindung anhand der beigefügten Abbildungen näher beschrieben. Es zeigen:
- Figuren 1 und 2: Anschliffe verschiedener Matrices aus RSiC, die aus verschiedenen Siliziumcarbid-Versätzen unter verschiedenen Bedingungen erhalten wurden;
- Figur 3: eine rasterelektronenmikroskopische Aufnahme der in Figur 2 gezeigten Matrix;
- Figur 4: den Anschliff eines Körpers aus einem Verbundwerkstoff aus kohlenstoffaserverstärktem Siliziumcarbid.

Zunächst soll beispielhaft die Herstellung eines faserverstärkten Siliziumcarbid-Keramikkörpers im Schlickerguß-Verfahren beschrieben werden. Das Schlickergußverfahren ist an sich bekannt und in den o.g. Druckschriften beschrieben. Der Einsatz dieses Verfahrens ist aber nicht zwingend.

Zunächst wird Wasser mit einem Verflüssiger vermischt. Dabei kann es sich um einen Verflüssiger auf der Basis von Ammoniumhydroxid oder auf organischer Basis handeln. Der pH-Wert der mit Ammoniumhydroxid verflüssigten Lösung wird auf 11,4 eingestellt. Der bimodale Siliziumcarbid-Versatz mit der Kornverteilung d₅₀ = 3 µm für die Grobkorn-Fraktion (70 %) und d₅₀ = 0,5 µm für die Feinkorn-Fraktion (30 %) wird in die Lösung eingerührt. Auf diese Weise wird ein homogener wässriger Schlicker mit einem Feststoffanteil von etwa 75 % hergestellt und dann mit Fasergewebelagen zum Formkörper verdichtet. Der verdichtete Körper wird im lederharten Zustand ausgeformt und bis zur Gewichtskonstanz bei 110°C (± 5°C) getrocknet.

Zur Sinterung des resultierenden Grünkörpers wird dieser in einem Graphitofen (Widerstandsofen) zunächst unter Vakuum, später unter Inertgas bis zu einer Endtemperatur von 1700°C erhitzt. Die Haltezeit beträgt 150 Minuten. Anschließend wird kontrolliert auf 1500° C heruntergekühlt. Danach erfolgt eine Sturzkühlung auf Raumtemperatur.

Der resultierende Verbundkörper weist eine Porosität von 19% auf und ist vollständig offenporig. Beim Sintern fand keine Schwindung und damit keine Formänderung des Körpers statt.

Der resultierende poröse Körper wurde mit einem Phenolharz vakuumimprägniert und bei 175°C bar im Autoklaven ausgehärtet. Der Körper wurde anschließend bei einer Temperatur von 1000°C unter Schutzgas pyrolysiert. Die darauf folgende Flüssigsilizierung erfolgte mittels Dochtinfiltration bei 1560°C. Die Haltezeit betrug 20 Minuten.

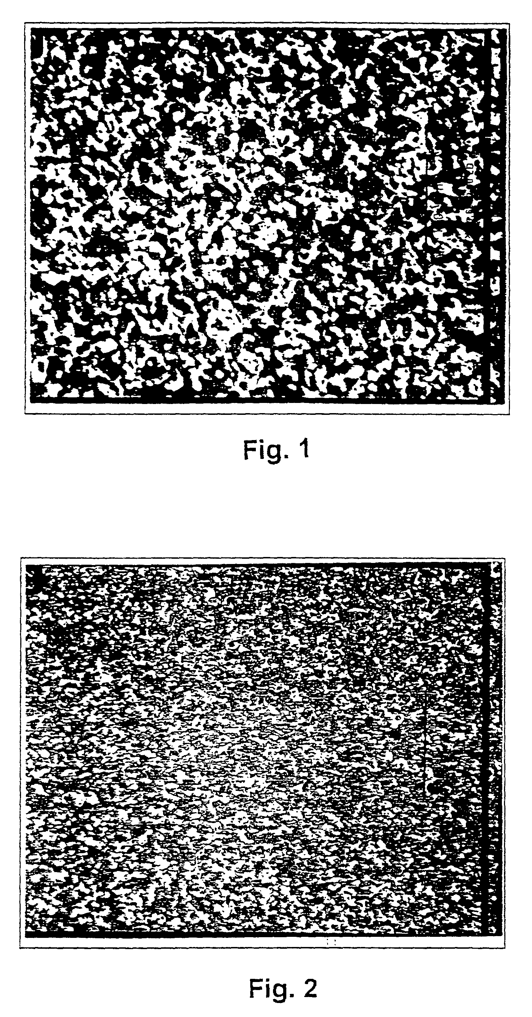

Figur 1 zeigt den Anschliff einer RSiC-Matrix, die mit dem soeben beschriebenen Schlickergußverfahren erhalten wurde. Es wurde ein Siliziumcarbid-Versatz mit einer bimodalen Kornverteilung mit 70 % Grobkornanteil und 30% Feinkornanteil verwendet. Der d₅₀-Wert des Grobkornanteils betrug 9,30 µm, der d₅₀-Wert des Feinkornanteil 1,00 µm. Die Sintertemperatur betrug 1720°C; die Haltezeit bei Tₘₐₓ 300 min. Das Ergebnis ist eine Matrix mit einer relativ grobporigen Struktur. Man erkennt sehr schön, daß diese Struktur sehr gleichmäßig und offenporig ist.

Figur 2 zeigt ebenfalls den Anschliff einer RSiC-Matrix. Im Unterschied zu der in Figur 1 dargestellten Matrix wurde diese aus einem monomodalen Kornversatz mit einem d₅₀-Wert von 1,00 µm gewonnen. Die übrigen Herstellungsparameter blieben unverändert. Die resultierende Matrix weist eine feinporige, ebenfalls sehr gleichmäßige offenporige Struktur auf. Die Struktur ist insgesamt feiner als diejenige der in Figur 1 gezeigten Matrix.

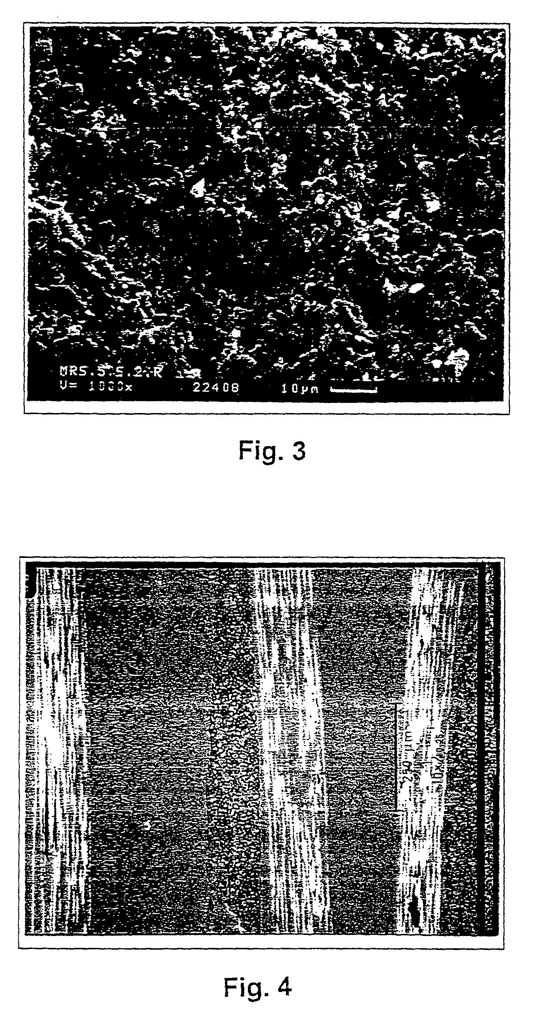

Figur 3 zeigt eine REM-Aufnahme der Matrix aus Figur 2. In dieser Darstellung ist der gleichmäßige Aufbau der porösen Matrix mit den feinverteilten Poren besonders gut zu erkennen.

Figur 4 zeigt einen Anschliff eines nach dem oben beschriebenen Verfahren hergestellten Verbundkörpers aus kohlenstofffaserverstärktem Siliziumcarbid (C/SiC). Zur Herstellung der RSiC-Matrix wurde ein bimodaler Kornversatz mit 70 % Grobkorn (d₅₀-Wert = 3,00 µm) und 30 % Feinkorn (d₅₀-Wert = 0,25 µm) verwendet. Der Schlicker wurde mit Kohlenstofffasern wie oben beschrieben versetzt und bei 1680°C gesintert. Die Haltezeit bei Tₘₐₓ betrug 150 min. Die resultierende Matrix wurde mit einem Phenolharz imprägniert, bei 175°C ausgehärtet und bei 1000°C unter einer Argon-Atmosphäre pyrolysiert. Die resultierende Kohlenstoff-Matrix wurde mittels Flüssigsilizierung bei 1560°C unter Vakuum konvertiert. Der Verbundkörper ist gleichmäßig konvertiert, ohne offene Poren, Kohlenstoff- oder Siliziuminseln.

Die faserverstärkten Materialien sind für tribologische Anwendungen, wie z.B. Bremseinheiten und Gleitelemente und für Strukturanwendungen, z.B. in Automobilbau und Rennsport, Triebwerksbau und Raumfahrt geeignet.

## Patentansprüche

1. Verfahren zur Herstellung eines Körpers mit einer porösen Matrix aus rekristallisiertem Siliziumcarbid, wobei ein Rohstoffversatz, der ein Rohstoff-Pulver aus Siliziumcarbid und ggf. Zuschlagstoffe enthält, zuerst einem Formgebungsprozeß und dann einem Sinterprozeß bei hoher Temperatur unterzogen wird, **dadurch gekennzeichnet, daß** ein Rohstoff-Pulver mit einer Korngrößenverteilung verwendet wird, die einen Feinkornanteil mit einer mittleren Korngröße von höchstens 2 µm und einen Grobkornanteil mit einer mittleren Korngröße von 1,5 µm bis 30 µm enthält und daß der Sinterprozeß bei einer Temperatur von höchstens 1800°C durchgeführt wird.

2. Verfahren nach Anspruch 1, **dadurch gekennzeichnet, daß** ein Rohstoff-Pulver mit einer monomodalen Korngrößenverteilung verwendet wird.

3. Verfahren nach Anspruch 2, **dadurch gekennzeichnet, daß** ein Rohstoff-Pulver mit einem d₅₀-Wert von weniger als 10 µm, vorzugsweise etwa 1 µm verwendet wird.

4. Verfahren nach Anspruch 1, **dadurch gekennzeichnet, daß** ein Rohstoffpulver mit einer bimodalen Korngrößenverteilung, bei der eine Feinkornfraktion und eine Grobkornfraktion mit einer Kornbandlücke vorliegen, verwendet wird.

5. Verfahren nach Anspruch 1, **dadurch gekennzeichnet, daß** ein Rohstoffpulver mit einer trimodalen Korngrößenverteilung, bei der eine Feinkornfraktion, eine mittelgrobe Kornfraktion und eine Grobkornfraktion mit zwei Kornbandlücken vorliegen, verwendet wird.

6. Verfahren nach Anspruch 4 oder 5, **dadurch gekennzeichnet, daß** eine Feinkornfraktion mit einer Korngröße von höchstens 3 µm, vorzugsweise 0,25 bis 1 µm und eine Grobkornfraktion mit einer Korngröße von 1,5 bis 30 µm, vorzugsweise 2 bis 5 µm verwendet wird.

7. Verfahren nach einem der vorhergehenden Ansprüche, **dadurch gekennzeichnet, daß** der Sinterprozeß bei einer Temperatur von 1400 bis 1800°C durchgeführt wird.

8. Verfahren nach Anspruch 7, **dadurch gekennzeichnet, daß** ein Siliziumcarbid-Versatz mit einem Kohlenstoff-Anteil entsprechend dem im Versatz enthaltenen Siliziumdioxid-Anteil verwendet wird.

9. Verfahren nach einem der vorhergehenden Ansprüche, **dadurch gekennzeichnet, daß** der Rohstoffversatz mit ein oder mehreren Arten von Verstärkungsfasern gemischt und weiterverarbeitet wird.

10. Verfahren nach Anspruch 9, **dadurch gekennzeichnet, daß** als Verstärkungsfasern Kurzfasern und/oder kontinuierliche Fasern wie Langfasern und/oder Fasergewebe verwendet werden.

11. Verfahren nach Anspruch 9 oder 10, **dadurch gekennzeichnet, daß** als Verstärkungsfasern Kohlenstoff-Fasern und/oder keramische Fasern und/oder oxidische Fasern und/oder nichtoxidische Fasern verwendet werden.

12. Verfahren nach einem der vorhergehenden Ansprüche, **dadurch gekennzeichnet, daß** als Formgebungsprozeß einer der folgenden Prozesse eingesetzt wird: Schlickerguß, Druckguß, Folienguß, Extrudierverfahren, Spritzguß, isostatisches Pressen, axiales Pressen, RAM-Pressen und vergleichbare Prozesse sowie Wickel- und Ablegetechniken.

13. Verfahren nach einem der vorhergehenden Ansprüche, **dadurch gekennzeichnet, daß** die poröse Matrix mit einem geeigneten metallischen oder nichtmetallischen Stoff versetzt, insbesondere durch Infiltration oder Reaktionsinfiltration zu einem vollständig dichten oder allenfalls Restporositäten enthaltenden Körper bzw. Verbundkörper umgesetzt wird.

14. Verfahren nach einem der Ansprüche 1 bis 13, **dadurch gekennzeichnet, daß** der aus dem Sinterprozeß resultierende poröse Körper mit Kohlenstoff oder einem Kohlenstoffspender infiltriert wird und der Kohlenstoff anschließend mit flüssigem Silizium zu Siliziumcarbid konvertiert wird.

15. Körper mit einer porösen Matrix aus rekristallisiertem Siliziumcarbid, **dadurch gekennzeichnet, daß** er durch das Verfahren nach einem der Ansprüche 1 bis 10 erhältlich ist.

16. Verfahren zur Herstellung eines faserverstärkten Körpers mit einer Verstärkungsfasern enthaltenden porösen Matrix, wobei das Verfahren die folgenden Schritte umfaßt:
a) Herstellen eines Rohstoffversatzes, der ein Rohstoff-Pulver und ggf. Zuschlagstoffe enthält, wobei ein Rohstoff-Pulver mit einer Korngrößenverteilung verwendet wird, die einen Feinkornanteil mit einer mittleren Korngröße von höchstens 2 µm und einen Grobkornanteil mit einer mittleren Korngröße von 1,5 µm bis 30 µm aufweist;
b) Mischen der Verstärkungsfasern mit diesem Rohstoffversatz;
c) Herstellen eines Grünkörpers, indem die resultierende Mischung einem Formgebungsprozeß unterworfen wird;
d) Sintern des Grünkörpers bei einer maximalen Temperatur von höchstens 1800°C, so daß ein faserverstärkter Körper mit einer porösen Matrix aus einem rekristallisierten keramischen Werkstoff entsteht;
e) Imprägnieren dieses Körpers mit einer Kohlenstoff spendenden Substanz;
f) Umwandeln der kohlenstoffhaltigen Substanz in Kohlenstoff, so daß ein faserverstärkter Körper mit einer kohlenstoffhaltigen porösen Matrix entsteht.

17. Verfahren nach Anspruch 16, **dadurch gekennzeichnet, daß** ein Rohstoffpulver mit einer monomodalen Korngrößenverteilung verwendet wird.

18. Verfahren nach Anspruch 17, **dadurch gekennzeichnet, daß** ein Rohstoff-Pulver mit einem d₅₀-Wert von weniger als 10 µm, vorzugsweise 1 µm verwendet wird.

19. Verfahren nach Anspruch 16, **dadurch gekennzeichnet, daß** ein Rohstoffpulver mit einer bimodalen Korngrößenverteilung, bei der eine Feinkornfraktion und eine Grobkornfraktion mit einer Kornbandlücke vorliegen, verwendet wird.

20. Verfahren nach Anspruch 16, **dadurch gekennzeichnet, daß** ein Rohstoffpulver mit einer trimodalen Korngrößenverteilung, bei der eine Feinkornfraktion, eine mittelgrobe Kornfraktion und eine Grobkornfraktion mit zwei Kornbandlücken vorliegen, verwendet wird.

21. Verfahren nach Anspruch 19 oder 20, **dadurch gekennzeichnet, daß** eine Feinkornfraktion mit einer Korngröße von höchstens 2 µm, vorzugsweise 0,5 bis 1 um und eine Grobkornfraktion mit einer Korngröße von 1,5 bis 30 µm, vorzugsweise 2 bis 5 µm verwendet wird.

22. Verfahren nach einem der vorhergehenden Ansprüche, **dadurch gekennzeichnet, daß** der Sinterprozeß bei einer Temperatur von 1400 bis 1800°C durchgeführt wird.

23. Verfahren nach einem der Ansprüche 16 bis 22, **dadurch gekennzeichnet, daß** als Rohstoffpulver Siliziumcarbid- und/oder Borcarbid- und/oder Borcnitrid- und/oder Aluminiumnitrid- und/oder Titancarbid-Pulver verwendet wird.

24. Verfahren nach Anspruch 23, **dadurch gekennzeichnet, daß** ein Siliziumcarbid-Versatz mit einem Kohlenstoff-Anteil entsprechend dem im Versatz enthaltenen Siliziumdioxid-Anteil verwendet wird.

25. Verfahren nach einem der Ansprüche 16 bis 24, **dadurch gekennzeichnet, daß** als Verstärkungsfasern Kurzfasern und/oder kontinuierliche Fasern wie Langfasern und/oder Fasergewebe verwendet werden.

26. Verfahren nach einem der Ansprüche 16 bis 25, **dadurch gekennzeichnet, daß** als Verstärkungsfasern Kohlenstoff-Fasern und/oder keramische Fasern und/oder oxidische Fasern und/ oder nichtoxidische Fasern verwendet werden.

27. Verfahren nach einem der Ansprüche 16 bis 26, **dadurch gekennzeichnet, daß** als Formgebungsprozeß einer der folgenden Prozesse eingesetzt wird: Schlickerguß, Druckguß, Folienguß, Extrusionsverfahren, Spritzguß, isostatisches Pressen, axiales Pressen, RAM-Pressen und vergleichbare Prozesse sowie Wickel- und Ablegetechniken.

28. Verfahren nach einem der Ansprüche 16 bis 27, **dadurch gekennzeichnet, daß** der aus dem Sinterprozeß resultierende faserverstärkte poröse Körper mit Kohlenstoff und/oder kohlenstoffhaltigen Precursoren und/oder metallischen oder nicht-metallischen Stoffen infiltriert wird und im Fall einer Kohlenstoffzugabe der Kohlenstoff anschließend mit flüssigem Silizium zu Siliziumcarbid konvertiert wird.

29. Faserverstärkter Körper mit einer Verstärkungsfasern enthaltenden porösen Matrix aus einem rekristallisierten keramischen Werkstoff, **dadurch gekennzeichnet, daß** er durch das Verfahren nach einem der Ansprüche 16 bis 28 erhältlich ist.

30. Verwendung eines faserverstärkten Körpers nach Anspruch 29 für tribologische Anwendungen, insbesondere Gleitlager, Gleitelemente, Bremsscheiben, Bremsbeläge sowie für strukturelle Anwendungen, insbesondere als Werkstoff im Automobil- und Triebwerksbau und in der Raumfahrt.

## Claims

1. Method for the production of a body with a porous matrix of recrystallised silicon carbide, in which a raw material mixture containing a raw material powder of silicon carbide and additives as necessary is first subjected to a forming process and then to a sintering process at high temperature,
**characterised in that**
a raw material powder is used whose particle size distribution comprises a fine-grained fraction with average particle size not exceeding 2 µm and a coarse-grained fraction with average particle size from 1.5 µm to 30 µm, and the sintering process is carried out at a temperature not exceeding 1800° C.

2. Method according to Claim 1,
**characterised in that**
a raw material powder with a monomodal particle size distribution is used.

3. Method according to Claim 2,
**characterised in that**
a raw material powder with a d₅₀ value smaller than 10 µm and preferably about 1 µm is used.

4. Method according to Claim 1,
**characterised in that**
a raw material powder with a bimodal particle size distribution is used, in which a fine-grained fraction and a coarse-grained fraction are present, with a particle size band interval between them.

5. Method according to Claim 1,
**characterised in that**
a raw material powder with a trimodal particle size distribution is used, in which a fine-grained fraction, a medium-sized grain fraction and a coarse-grained fraction are present, with two particle size band intervals.

6. Method according to Claims 4 or 5,
**characterised in that**
a fine-grained fraction with particle size not exceeding 3 µm and preferably 0.25 to 1µm and a coarse-grained fraction with particle size of 1.5 to 30 µm and preferably 2 to 5 µm are used.

7. Method according to any of the preceding claims,
**characterised in that**
the sintering process is carried out at a temperature of 1400° to 1800°.

8. Method according to Claim 7,
**characterised in that**
a silicon carbide mixture with a carbon fraction that corresponds to the silicon dioxide fraction contained in the mixture is used.

9. Method according to any of the preceding claims,
**characterised in that**
the new raw material mixture is mixed with one or more kinds of reinforcing fibres and processed further.

10. Method according to Claim 9,
**characterised in that**
as reinforcing fibres, short fibres and/or continuous fibres such as long fibres and/or fibre tissues are used.

11. Method according to Claims 9 or 10,
**characterised in that**
as reinforcing fibres, carbon fibres and/or ceramic fibres and/or oxide fibres are used.

12. Method according to any of the preceding claims,
**characterised in that**
the forming process used is one of the following: slush casting, pressure casting, foil casting, extrusion, injection casting, isostatic pressing, axial pressing, RAM pressing and comparable processes, as well as winding and layering techniques.

13. Method according to any of the preceding claims,
**characterised in that**
the porous matrix is reacted with a suitable metallic or non-metallic material, in particular by infiltration or reaction infiltration, to give a fully compact body or composite body, or at any rate one that contains residual porosity.

14. Method according to any of Claims 1 to 13,
**characterised in that**
the porous body produced by the sintering process is infiltrated with carbon or a carbon spender and the carbon is then converted with molten silicon to silicon carbide.

15. Body with a porous matrix of recrystallised silicon carbide,
**characterised in that**
it is obtained by the method according to any of Claims 1 to 10.

16. Method for the production of a fibre-reinforced body with a porous matrix containing reinforcing fibres, the said method comprising the following steps:
a) production of a raw material mixture containing a raw material powder and additives as necessary, the said raw material powder having a particle size distribution comprising a fine-grained fraction with average particle size not exceeding 2 µm and a coarse-grained fraction with average particle size 1.5 to 30 µm;
b) mixing of the reinforcing fibres with this raw material mixture;
c) production of a green body by subjecting the resulting mixture to a forming process;
d) sintering of the green body at a maximum temperature not exceeding 1800° C, so that a fibre-reinforced body with a porous matrix of recrystallised ceramic material is produced;
e) impregnation of this body with a carbon-spender substance;
f) transformation of the carbon-containing substance into carbon, so that a fibre-reinforced body with a carbon-containing porous matrix is produced.

17. Method according to Claim 16,
**characterised in that**
a raw material with a monomodal particle size distribution is used.

18. Method according to Claim 17,
**characterised in that**
a raw material powder with a d₅₀ value smaller than 10 µm, preferably 1µm, is used.

19. Method according to Claim 16,
**characterised in that**
a raw material powder with a bimodal particle size distribution is used, in which a fine-grained fraction and a coarse-grained fraction are present, with a particle size band interval between them.

20. Method according to Claim 16,
**characterised in that**
a raw material powder with a trimodal particle size distribution is used, in which a fine-grained fraction, a medium-size grain fraction and a coarse-grained fraction are present, with two particle size band intervals.

21. Method according to Claims 19 or 20,
**characterised in that**
a fine-grained fraction with particle size not exceeding 2µm and preferably 0.5 to 1 µm and a coarse-grained fraction with particle size 1.5 to 30 µm are used.

22. Method according to any of the preceding claims,
**characterised in that**
the sintering process is carried out at a temperature of 1400° to 1800°C.

23. Method according to any of Claims 16 to 22,
**characterised in that**
as the raw material powder, silicon carbide and/or boron carbide and/or boron nitride and/or aluminium nitride and/or titanium carbide powder is/are used.

24. Method according to Claim 23,
**characterised in that**
a silicon carbide mixture is used, which contains a carbon fraction corresponding to the silicon dioxide fraction present in the mixture.

25. Method according to any of Claims 16 to 24,
**characterised in that**
as reinforcing fibres, short fibres and/or continuous fibres such as long fibres and/or fibre tissue are used.

26. Method according to any of Claims 16 to 25,
**characterised in that**
as reinforcing fibres, carbon fibres and/or ceramic fibres and/or oxide fibres and/or non-oxide fibres are used.

27. Method according to any of Claims 16 to 26,
**characterised in that**
the forming process used is one of the following: slush casting, pressure casting, foil casting, extrusion, injection casting, isostatic pressing, axial pressing, RAM pressing and comparable processes, as well as winding and layering techniques.

28. Method according to any of Claims 16 to 27,
**characterised in that**
the fibre-reinforced porous body resulting from the sintering process is infiltrated with carbon and/or carbon-containing precursors and/or metallic or non-metallic materials, and in the case of carbon addition the carbon is then converted with molten silicon into silicon carbide.

29. Fibre-reinforced body with a porous matrix of a recrystallised ceramic material containing reinforcing fibres,
**characterised in that**
it is obtained by the method according to any of Claims 16 to 28.

30. Use of a fibre-reinforced body according to Claim 29 for tribological applications, in particular slide bearings, slide elements, brake discs, brake linings, and for structural applications, in particular as a material in automobile and transmission construction and in aerospace.

## Revendications

1. Procédé pour la fabrication d'un corps ayant une matrice poreuse en carbure de silicium recristallisé, composé d'une matière première pulvérulente en carbure de silicium et de granulats, le cas échéant, qui est soumise tout d'abord à un process de mise en forme qui est suivi d'un processus de frittage à haute température, **caractérisé en ce qu'**une matière première pulvérulente dotée d'une répartition granulométrique avec une teneur en fines d'une granulométrie moyenne d'au maximum 2 µm et une teneur en grosses d'une granulométrie moyenne allant de 1,5 µm à 30 µm est utilisée et que le processus de frittage est réalisé à une température maximale de 1 800°C.

2. Procédé selon la revendication 1, **caractérisé en ce qu'**une matière première pulvérulente d'une répartition granulométrique monomodale est utilisée.

3. Procédé selon la revendication 2, **caractérisé en ce qu'**une matière première pulvérulente d'une valeur d₅₀ inférieure à 10 µm, de préférence environ 1 µm, est utilisée.

4. Procédé selon la revendication 1, **caractérisé en ce qu'**une matière première pulvérulente d'une répartition granulométrique bimodale présentant une fraction de fines et une fraction de grosses et un vide granulométrique est utilisée.

5. Procédé selon la revendication 1, **caractérisé en ce qu'**une matière première pulvérulente d'une répartition granulométrique trimodale présentant une fraction de fines, une fraction de grains moyens et une fraction de grosses et deux vides du spectre granulométrique est utilisée.

6. Procédé selon l'une des revendications 4 ou 5, **caractérisé en ce qu'**une fraction de fines avec une granulométrie d'au maximum 3 µm, de préférence entre 0,25 et 1 µm et d'une fraction de grosses avec une granulométrie située entre 1,5 et 30 µm, de préférence entre 2 et 5 µm, est utilisée.

7. Procédé selon l'une des revendications précédentes, **caractérisé en ce que** le processus de frittage est réalisé à une température entre 1 400 et 1 800°C.

8. Procédé selon la revendication 7, **caractérisé en ce que** le mélange de carbure de silicium est utilisé avec une teneur en carbone correspondante à la teneur en silice dudit mélange.

9. Procédé selon l'une des revendications précédentes, **caractérisé en ce que** le mélange de matières premières est mélangé avec un ou plusieurs types de fibres de renfort pour traitement ultérieur.

10. Procédé selon la revendication 9, **caractérisé en ce que** les fibres de renfort utilisées peuvent être des fibres courtes et/ou des fibres continues telles que les fibres allongées et/ou des tissus en fibres.

11. Procédé selon la revendication 9 et 10, **caractérisé en ce que** les fibres de renfort utilisées sont des fibres de carbone et/ou des fibres céramiques et/ou des fibres oxydées et/ou des fibres non oxydées.

12. Procédé selon l'une des revendications précédentes, **caractérisé en ce que** le processus de façonnage mis en oeuvre est l'un des processus suivants : coulage de barbotine, coulage sous pression, coulage en bande, extrusion, moulage par injection, pressage isostatique, pressage axial, pressage RAM et des processus similaires, ainsi que les techniques d'enroulement/cintrage et de dépose.

13. Procédé selon l'une des revendications précédentes, **caractérisé en ce que** la matrice poreuse est mélangée à une substance appropriée, métallique ou non métallique, en particulier par infiltration ou infiltration réactionnelle, pour être transformée en un corps ou un corps composite complètement densifié, présentant tout au plus des porosités résiduelles.

14. Procédé selon l'une des revendications 1 à 13, **caractérisé en ce que** le corps poreux résultant du processus de frittage est infiltré de carbone ou d'un donneur de carbone et que le carbone est converti par la suite avec du silicium liquide en carbure de silicium.

15. Corps ayant une matrice poreuse en carbure de silicium recristallisé, **caractérisé en ce qu'**il est susceptible d'être obtenu au moyen du procédé selon l'une des revendications 1 à 11.

16. Procédé pour la fabrication d'un corps renforcé par fibres ayant une matrice poreuse contenant des fibres de renfort et où le procédé est composé des étapes suivantes:
a) la fabrication d'un composé de matières premières composé d'une matière première pulvérulente et de granulats, le cas échéant, où une matière première pulvérulente d'une répartition granulométrique comportant une part de fines avec une granulométrie moyenne d'au maximum 2 µm et une part de grosses avec une granulométrie moyenne de 1,5 µM à 30 µM est utilisée ;
b) le mélange des fibres de renfort avec cette matière première composite ;
c) la fabrication d'un corps vert en soumettant le mélange résultant à un processus de façonnage ;
d) le frittage du corps vert à une température maximale de 1800°C, pour produire un corps renforcé de fibres, ayant une matrice poreuse, dans un matériau céramique recristallisé ;
e) l'imprégnation de ce corps avec une substance donneuse de carbone ;
f) la transformation de cette substance carbonée en carbone, afin de créer un corps renforcé de fibres ayant une matrice poreuse carbonée.

17. Procédé selon la revendication 16, **caractérisé en ce qu'**une matière première pulvérulente avec une répartition granulométrique monomodale est utilisée.

18. Procédé selon la revendication 17, **caractérisé en ce qu'**une matière première pulvérulente avec une valeur d₅₀ de moins de 10 µm, de préférence 1 µm est utilisée.

19. Procédé selon la revendication 16, **caractérisé en ce qu'**une matière première pulvérulente avec une répartition granulométrique bimodale avec une fraction de fines et une fraction de grosses et un vide dans la bande spectrale granulométrique est utilisée.

20. Procédé selon la revendication 16, **caractérisé en ce qu'**une matière première pulvérulente avec une répartition granulométrique trimodale avec une fraction de fines, une fraction à granulométrique moyennement grosse et une fraction de grosses et deux vides dans la bande spectrale granulométrique est utilisée.

21. Procédé selon l'une des revendications 19 ou 20, **caractérisé en ce qu'**une fraction de fines avec une granulométrie d'au maximum 2 µm, de préférence de 0,5 à 1 µm et une fraction de grosses avec une granulométrie de 1,5 à 30 µm, de préférence 2 à 5 µm est utilisée.

22. Procédé selon l'une des revendications précédentes, **caractérisé en ce que** le processus de frittage est réalisé à une température de 1 400 à 1 800°C.

23. Procédé selon l'une des revendications 16 à 22, **caractérisé en ce que** la matière première pulvérulente utilisée est soit de la poudre de carbure de silicium et/ou de carbure de bore et/ou de nitrure de bore et/ou de nitrure d'aluminium et/ou de carbure de titan.

24. Procédé selon la revendication 23, **caractérisé en ce qu'**un composé de carbure de silicium avec une teneur en carbone correspondante à la teneur en siliciure du mélange est utilisé.

25. Procédé selon l'une des revendications 16 à 24, **caractérisé en ce que** les fibres de renfort utilisées sont des fibres courtes et/ou des fibres continues telles que les fibres allongées et/ou des tissus de fibre.

26. Procédé selon l'une des revendications 16 à 25, **caractérisé en ce que** les fibres de renfort utilisées sont des fibres de carbone et/ou des fibres céramiques et/ou des fibres oxydées et/ou des fibres non oxydées.

27. Procédé selon l'une des revendications 16 à 26, **caractérisé en ce que** le processus de façonnage mis en oeuvre est l'un des processus suivants : coulage de barbotine, coulage sous pression, coulage en bande, extrusion, moulage par injection, pressage isostatique, pressage axial, pressage RAM et des procédés similaires ainsi que les techniques d'enroulement/cintrage et de dépose.

28. Procédé selon l'une des revendications 16 à 27, **caractérisé en ce que** le corps poreux renforcé de fibres résultant du processus de frittage est infiltré de carbone et/ou de précurseurs carbonée et/ou de substances métalliques ou non métalliques, et où, dans le cas d'une adjonction de carbone, le carbone est converti avec du silicium liquide en carbure de silicium.

29. Corps dans un matériau céramique recristallisé, renforcé de fibres ayant une matrice poreuse contenant des fibres de renfort, **caractérisé en ce qu'**il est susceptible d'être obtenu par un procédé selon l'une des revendications 16 à 28.

30. Utilisation d'un corps, renforcé de fibres selon la revendication 29, dans des applications tribologiques, en particulier pour les paliers à glissement, éléments lisses, disques de freins, plaquettes de freins ainsi que dans des applications structurelles, en particulier par sa mise en oeuvre en tant que matériau dans la construction automobile et des moteurs et dans le domaine aérospatial.
